# EUROPÄISCHE PATENTSCHRIFT

(11) **EP 3 601 865 B1**
(45) Veröffentlichungstag und Bekanntmachung des Hinweises auf die Patenterteilung: **11.05.2022**
(21) Anmeldenummer: 18716363.9
(22) Anmeldetag: 30.03.2018
(51) Int. Cl.: F16L 21/00

(54) **ROHRKUPPLUNG**
PIPE COUPLING
RACCORD DE TUBE

(30) Priorität: 31.03.2017 EP 17164165
(43) Veröffentlichungstag der Anmeldung: 05.02.2020
(73) Patentinhaber: Straub Werke AG, 7323 Wangs (CH)
(72) Erfinder: MANNHART, Hubert, 7320 Sargans (CH); SUDAR, Damir, 7310 Bad Ragaz (CH)
(74) Vertreter: Patentbüro Paul Rosenich AG
(86) Internationale Anmeldenummer: PCT/IB2018/052228
(87) Internationale Veröffentlichungsnummer: WO 2018/178946

(56) Entgegenhaltungen:
- EP-B1- 1 767 842
- WO-A1-2009/107061
- WO-A1-2013/118079
- DE-U1- 20 209 784
- GB-A- 2 470 276

## Beschreibung

Die Erfindung betrifft eine Rohrkupplung nach dem Oberbegriff des Anspruchs 1.

Rohrkupplungen werden in verschiedensten Anwendungsgebieten zur fluiddichten Verbindung zweier Rohrenden eingesetzt. Sie werden in grossen Stückzahlen hergestellt, da je nach Verwendung im industriellen Feld, wie beispielsweise im Schiffsbau oder in industriellen Anlagen, eine Vielzahl von Rohrkupplungen verbaut werden. Dabei müssen die Rohrkupplungen den entsprechenden Normen entsprechen und hohen mechanischen Anforderungen standhalten.

Aus der DE 691 31 402 T2 (EP 0 667 476 B1) ist eine Rohrkupplung bekannt, welche ein inneres Mantelrohr und ein äusseres Mantelrohr mit einem Spannmittel umfasst, wobei die beiden Mantelrohre direkt ineinander angeordnet werden. Die axialen Endränder beider Mantelrohre sind nach innen gebogen und bilden jeweils einen Seitenflansch aus. Der Seitenflansch des äusseren Mantelrohres begrenzt die axiale Bewegung des inneren Mantelrohrs und der Seitenflansch des inneren Mantelrohrs begrenzt die axiale Bewegung einer darin angeordneten Dichtung.

Nachteilig an dieser bekannten Lösung ist, dass das äussere Mantelrohr, welches das Schellenband ausbildet, sowie das innere Mantelrohr, welches das Innengehäuse ausbildet, eine aufwändige Herstellung erfordern. Die Herstellungsprozesse müssen bei dieser Rohrkupplung so abgestimmt werden, dass das innere Mantelrohr in das äussere Mantelrohr passt. Weiter ist die Montage dieser Rohrkupplung sehr aufwendig und zeitraubend.

Aus der EP 1 767 842 B1 ist eine Rohrkupplung mit einem Gehäuse, welches aus voneinander beabstandeten Segmenten besteht, mit einem elastischen Ring, der innerhalb des Gehäuses angeordnet ist, und mit einem Festziehband bekannt, welches mittels einer Befestigungseinheit zusammengezogen wird. Der elastische Ring weist mehrere Greifvorsprünge auf, welche in jeweilige Positionierlöcher der Gehäusesegmente eingreifen. Die einzelnen Gehäusesegmente weisen auf deren äusseren Mantelfläche Führungsteile zum Führen des Festziehbands auf.

Nachteilig an der bekannten Lösung ist, dass das Innengehäuse aus mehreren einzelnen, voneinander beabstandeten Segmenten besteht. Die ohnehin aufwändige Montage der Rohrkupplung wird massiv erschwert, da die Gehäusesegmente am elastischen Ring einzeln angeordnet und anschliessend vom Festziehband umschlossen werden müssen. Während dem Verspannungsvorgang der einzelnen Gehäusesegmente besteht die Gefahr, dass der als Dichteeinlage dienende elastische Ring über das gewünschte Mass verformt wird und zwischen den Gehäusesegmenten eingequetscht wird. Dies führt zwangsläufig zu einer Beschädigung des elastischen Rings, wodurch die Rohrkupplung undicht wird und getauscht werden muss.

Die WO 2013/118079 A1 zeigt eine Rohkupplung, welche ein doppellagiges Schellenband mit einem Spannmechanismus umfasst, wobei die beiden freien Enden des Aussenbands des Schellenbands mit dem Innenband des Schellenbands mittels Nieten verbunden sind.

Die GB 2 470 276 A zeigt eine Spannschelle mit einer Aussen- und einer Innenseite mit einem über einen Grossteil seines Umfanges umgebenden Schellenband, dessen Endbereiche als gegen die Innenseite der Schelle umgebogene Schlaufen mit freien Enden ausgebildet sind, wobei der Überlappungsbereich der Schlaufen an jeweils einer Verbindungsstelle mit dem Schellenband verbunden sind.

Die DE 202 09 784 U1 zeigt eine Rohrschelle zum Verbinden zweier Rohrenden mit einem Spannmechanismus an einem Schellenmantel und mit an der Innenseite des Schellenmantels befestigten Metallstreifen als Verankerungsringe. Der Schellenmantel ist einlagig ausgebildet und mit den Metallstreifen formschlüssig verbunden. Dafür weist das Schellenband mehrere Bügel auf, in welche sich die jeweiligen Enden der Metallstreifen erstrecken.

Nachteilig an dieser bekannten Lösung ist, dass die Metallstreifen an der Innenseite des Schellenbands fixiert sind und diese somit bei der Montage der Rohrschelle an den jeweiligen Rohrenden nicht beliebig positionierbar sind.

Aufgabe der vorliegenden Erfindung ist es, eine Rohrkupplung sowie ein Schellenband zu schaffen, welche die vorgenannten Nachteile nicht aufweisen und insbesondere bei Anwendungen unter erschwerten Bedingungen leicht und schnell montierbar sind.

Die Aufgabe wird durch die Merkmale des unabhängigen Anspruchs gelöst.

Vorteilhafte Weiterbildungen sind in den Figuren und in den abhängigen Patentansprüchen dargelegt.

Gemäss der Erfindung umfasst eine Rohrkupplung zum Verbinden zweier Rohrenden ein Schellenband und zumindest ein zumindest bereichsweise darin angeordnetes Innengehäuse, wobei das Schellenband einen Längsschlitz aufweist, sowie einen Spannmechanismus zur Reduktion des Innendurchmessers des Schellenbandes. Das Schellenband ist weiter einteilig und flach ausgebildet und weist zumindest einen ersten Aussenbandabschnitt und zumindest einen ersten Innenbandabschnitt auf, welche über zumindest ein Verbindungsmittel verbunden sind. Weiter ist eine Verbindungsandordnung zur Sicherung des zumindest einen Innengehäuses im Schellenband vorgesehen, welche aus zumindest einem ersten Verbindungsteil und zumindest einem zweiten Verbindungsteil besteht, wobei sich das zumindest eine erste Verbindungsteil in das zumindest eine zweite Verbindungsteil erstreckt und zumindest eines der Verbindungsteile der Verbindungsanordnung als das zumindest eine Verbindungsmittel zum Verbinden des zumindest ersten Aussenbandabschnitts mit dem zumindest ersten Innenbandabschnitt des Schellenbands ausgebildet ist.

Dadurch wird eine definierte Positionierung des zumindest einen Innengehäuses im Schellenband der Rohrkupplung sichergestellt. Während des Montagevorgangs wird beispielsweise das zumindest eine Innengehäuse der Rohrkupplung im Bereich der beiden zu verbindenden Rohrenden angeordnet und anschliessend wird das Schellenband mittels der Verbindungsandordnung am zumindest einen Innengehäuse positioniert, wodurch eine einfache Montage der Rohrkupplung ermöglicht wird und beispielsweise eine Verschmutzung im Bereich zwischen dem zumindest einen Innengehäuse und dem Schellenband unterbunden wird. Dabei soll eine robuste und dichte Rohrverbindung geschaffen werden, welche auch hohen Axialbelastungen standhalten kann.

Vorteilhaft ist das zumindest eine Verbindungsmittel am Schellenband angeordnet. Mit dieser Massnahme ist eine kostengünstige Herstellung dieser Rohrkupplung mit wenigen Arbeitsschritten möglich.

Vorzugsweise weist zumindest eines der Verbindungsteile eine Ausnehmung auf. Durch die Ausnehmung, welche auch als Vertiefung ausgebildet sein kann, wird das Eingreifen des einen Verbindungsteils in das andere Verbindungsteil der Verbindungsanordnung vereinfacht und eine rasche Montage der Rohrkupplung durchführbar.

Bevorzugt ist zumindest eines der Verbindungsteile als Öffnung ausgebildet, wodurch ein ganzheitliches Eingreifen des weiteren Verbindungsteils in das andere Verbindungsteil der Verbindungsanordnung erfolgt und eine Ansammlung von Verschmutzungen, beispielsweise Flüssigkeiten (Regenwasser, Meerwasser, Chemikalien usw.), im Verbindungsteil unterbunden wird.

Vorzugsweise ist zumindest eines der Verbindungsteile als Rundloch ausgebildet, wodurch eine Positionierung des zumindest einen Innengehäuses relativ zum Schellenband während der Montage einfach ausführbar ist.

Alternativ ist zumindest eines der Verbindungsteile als Langloch ausgebildet, wodurch die Position des Schellenbands und des zumindest einen Innengehäuses während des Montagevorgangs relativ zueinander entlang einer durch das Langloch definierten Richtung nachjustierbar ist, womit besondere Montageumstände einfach berücksichtigt werden können. Beispielsweise kann zuerst das zumindest eine Innengehäuse an zuerst einem Rohrende oder direkt an den beiden zu verbindenden Rohrenden angeordnet werden und das Schellenband aufgrund des Langlochs so ausgerichtet werden, dass eine ausgerichtete und daher einfache Montage der Rohrkupplung erfolgen kann. Somit ist diese Rohrkupplung für verschiedene Anwendungen flexibel einsetzbar. Beispielsweise verläuft das zumindest eine Langloch entlang oder schräg zu der Mantelfläche des zumindest einen Innengehäuses oder des Schellenbands, womit eine Verschiebung oder Verdrehung des Schellenbands oder des zumindest einen Innengehäuses möglich ist. Dadurch multiplizieren sich die Einsatzgebiete der Rohrkupplung. Beispielsweise verläuft das zumindest eine Langloch entlang einer Kurve auf der Mantelfläche des zumindest einen Innengehäuses oder des Schellenbands, womit die Variabilität in der Abwinkelung der zu verbindenden Rohrenden zueinander gegeben ist und die Längsachsenfehlausrichtung der beiden aufeinandertreffenden Rohrenden kompensiert wird.

Alternativ ist zumindest eines der Verbindungsteile als Rundloch und zumindest eines der Verbindungsteile als Langloch ausgebildet. Weiter wird beispielsweise das zumindest eine Innengehäuse entlang des Langlochs relativ zum Schellenband justierbar, wobei das Rundloch als Drehpunkt dient. Diese zusätzliche Justiermöglichkeit reduziert unerwünschte Verspannungen in der Rohrkupplung. Damit wird einerseits die Positionierung des zumindest einen Innengehäuses relativ zum Schellenband während der Montage vereinfacht und andererseits werden mögliche Verschmutzungen im Bereich der Verbindungsteile leicht entfernbar.

Bevorzugt greift im zusammengeführten Zustand der Verbindungsanordnung das zumindest eine erste Verbindungsteil passgenau in das zumindest eine zweite Verbindungsteil ein. Beispielsweise wird bei einem Rundloch als das zumindest eine zweite Verbindungsteil vorteilhaft eine Nocke oder ein Vorsprung als das zumindest eine erste Verbindungsteil verwendet. Bei einem Langloch als das zumindest eine zweite Verbindungsteil kann auch ein Steg, als Alternative zu einer Nocke oder einem Vorsprung als das zumindest eine erste Verbindungsteil verwendet werden. Mit einer solchen Massnahme wird die Spannkraft der Rohrkupplung verbessert, da durch das Verspannen des Spannmechanismus der Rohrkupplung der Innendurchmesser des zumindest einen Innengehäuses nahezu spielfrei reduziert wird. Des Weiteren sind höhere Spannkräfte auf das zumindest eine Innengehäuse übertragbar, womit gleichzeitig dünnere Schellenbandmaterialien verwendbar sind, da das zumindest eine Innengehäuse bei der Übertragung der auftretenden Kräfte mitträgt. Durch den geringeren Materialbedarf, lassen sich die Herstellungskosten der Rohrkupplung senken, was bei einem Massenprodukt, wie es diese Rohrkupplung darstellt, ein wesentlicher Vorteil hat.

Vorzugsweise erstreckt sich im zusammengeführten Zustand der Verbindungsanordnung das zumindest eine erste Verbindungsteil über das zumindest eine zweite Verbindungsteil hinaus, wobei der überstehende Abschnitt der Fixierung eines weiteren Teils der Rohrkupplung oder einem an der Rohrkupplung anzuordnenden Teil dienen kann. Bei einem Abschnitt der sich radial nach innen erstreckt, kann dieser beispielsweise der Fixierung einer im zumindest einen Innengehäuse angeordneten Dichteinlage dienen. Bei einem Abschnitt der sich radial nach aussen erstreckt, kann dieser beispielsweise der Fixierung einer Ummantelung, beispielsweise einer feuerfesten Ummantelung (Brandschutz), an der Rohrkupplung dienen.

Bevorzugt ist das zumindest eine erste Verbindungsteil am Schellenband und das zumindest eine zweite Verbindungsteil am zumindest einen Innengehäuse angeordnet, womit eine einfache Sicherung des zumindest einen Innengehäuses relativ zum Schellenband ermöglicht wird und der Montagevorgang beschleunigt wird. Dabei ist das zumindest eine erste Verbindungsteil vorteilhaft als Vorsprung ausgebildet, welches sich in das vorteilhaft als Vertiefung oder als Öffnung ausgebildete zumindest eine zweite Verbindungsteil erstreckt.

Alternativ ist das zumindest eine erste Verbindungsteil am Schellenband als Vertiefung oder als Öffnung ausgebildet, in welches sich das als Vorsprung ausgebildete zumindest eine zweite Verbindungsteil des zumindest einen Innengehäuses erstreckt. Mit dieser Massnahme lässt sich eine definierte Positionierung des Schellenbands relativ zum zumindest einen Innengehäuse von aussen überprüfen.

Alternativ weist das Schellenband und das zumindest eine Innengehäuse jeweils sowohl zumindest ein erstes Verbindungsteil als auch zumindest ein zweites Verbindungsteil auf. Mit dieser Massnahme wird die Montage der Rohrkupplung vereinfacht, da beispielsweise eine bestimmte Konfiguration im zusammengesetzten Zustand der Rohrkupplung gegeben ist. Vorteilhaft ist dabei das zumindest eine erste Verbindungsteil komplementär zum zumindest einen zweiten Verbindungsteil ausgebildet.

Alternativ ist das zumindest eine Verbindungsmittel am zumindest einen Innengehäuse angeordnet, womit eine einstellbare Verbindung des zumindest einen Innengehäuses mit dem Schellenband möglich ist und somit ungewollte Verspannungen zwischen dem zumindest einen Innengehäuse und dem Schellenband zumindest reduziert werden. Beispielsweise wird ein ausserhalb am Schellenband angeordnetes Antriebsmittel des lösbaren Verbindungsmittels zum Lösen der Verspannungen zwischen dem zumindest einen Innengehäuse und dem Schellenband verwendet.

Bevorzugt ist zumindest eines der Verbindungsteile lösbar ausgebildet, wodurch eine temporäre und/oder einstellbare Sicherung des zumindest einen Innengehäuses mit dem Schellenband ermöglicht ist. Eine temporäre Sicherung des zumindest einen Innengehäuses mit dem Schellenband vereinfacht die Montage der Rohrkupplung während des Spannvorgangs. Ein anschliessendes Lösen zumindest eines dieser Verbindungsteile führt zu einem Abbau unerwünschter Verspannungen in der Rohrkupplung. Weiter ermöglicht die lösbare Ausführungsform von zumindest einem der Verbindungsteile ein Verschieben des Schellenbands relativ zum zumindest einen Innengehäuse in einem definierten Rahmen.

Vorzugsweise weist die Verbindungsanordnung zumindest ein Verbindungsmittel zum Verbinden des zumindest ersten Aussenbandabschnitts mit dem zumindest ersten Innenbandabschnitt des Schellenbands auf, womit eine einfache und kostensparende Herstellung der Rohrkupplung realisierbar ist. Die Verbindungsanordnung weist in dieser Ausführungsform beispielsweise jeweils eine Öffnung als das zumindest eine erste und das zumindest eine zweite Verbindungsteil auf sowie zumindest ein Verbindungsmittel (Bolzen, Schraube, Niete, usw.), welches vorteilhaft radial nach aussen an der Rohrkupplung angeordnet ist. Die Verbindungsanordnung verbindet dadurch sowohl das Aussenband mit dem Innenband des Schellenbands und sichert gleichzeitig das zumindest eine Innengehäuse allseitig gegen unerwünschte räumliche Positionierungen.

Bevorzugt sind zumindest ein erstes Verbindungsteil der Verbindungsanordnung am Schellenband und zumindest ein zweites Verbindungsteil der Verbindungsanordnung am zumindest einen Innengehäuse als Öffnung ausgebildet, wobei sich das zumindest eine Verbindungsmittel zum lösbaren Verbinden des Schellenbands mit dem zumindest einen Innengehäuse durch die jeweiligen Öffnungen erstreckt. Damit lassen sich unerwünschte Verspannungen in der Rohrkupplung verhindern.

Vorteilhaft weist das zumindest eine Verbindungsmittel einen Anschlag auf, welcher am zumindest einem Innengehäuse anliegt. Weiter erstreckt sich das zumindest eine Verbindungsmittel vorteilhaft durch die beiden Öffnungen sowie weiter vorteilhaft über die beiden Öffnungen radial nach aussen entgegen der Richtung zur Längsachse des Schellenbands. Das zumindest eine Verbindungsmittel weist ein Antriebsmittel zur lösbaren Verbindung des zumindest einen Innengehäuses mit dem Schellenband auf, sodass ein Lösen etwaiger Verspannungen zwischen dem zumindest einen Innengehäuse und dem Schellenband erfolgen kann.

Bevorzugt ist die Verbindungsanordnung in einem Bereich gegenüber des Längsschlitzes des Schellenbands angeordnet, wodurch eine einfache und symmetrische Herstellung des Schellenbands mit vorteilhafter Kraftübertragung ermöglicht wird.

Bevorzugt sind die beiden Enden des Schellenbands auf Stoss angeordnet, wodurch das Schellenband entlang einem Grossteil seines Umfangs doppellagig ausgebildet ist. Diese Massnahme bewirkt bei einem geringeren Materialaufwand eine hohe Spannwirkung, welche entlang des nahezu gesamten Umfangs des Schellenbands wirkt und die Herstellung einer robuste Rohkupplung ermöglicht.

Alternativ sind die beiden Enden des Schellenbands auf Stoss angeordnet und die Verbindungsanordnung in einem Bereich gegenüber des Längsschlitzes des Schellenbands angeordnet. Diese Massnahme bewirkt eine hohe Spannwirkung, welche entlang des nahezu gesamten Umfangs des Schellenbands wirkt und weiter wird eine konstante Spannwirkung entlang des Umfangs des Schellenbands ausgeübt.

Vorzugsweise sind die beiden Enden auf Stoss aussenseitig am Innenbandabschnitt des doppellagigen Schellenbands angeordnet, wodurch eine einfache Herstellung auch mit grossen Stückzahlen ermöglicht wird und die Rohkupplung im montierten Zustand leicht auf Beschädigung überprüfbar ist.

Alternativ sind die beiden Enden des Schellenbands auf Stoss innenseitig am Aussenbandabschnitt des doppellagigen Schellenbands angeordnet, wodurch die Spannwirkung des Schellenbands verbessert wird, da das Aussenband gleichmässig auf die beiden Enden des Schellenbands drückt.

Bevorzugt ist die Verbindungsanordnung als formschlüssige Verbindung ausgebildet, wodurch eine kostensparende Herstellung bei Gewährleistung einer hohen Sicherheit der Verbindung ermöglicht wird.

Alternativ ist die Verbindungsanordnung als kraftschlüssige Verbindung ausgebildet, womit eine einstellbare Verspannung des zumindest ersten Verbindungsteil mit dem zumindest zweiten Verbindungsteil ermöglicht wird.

Alternativ ist die Verbindungsanordnung sowohl als formschlüssige Verbindung als auch als kraftschlüssige Verbindung ausgebildet. Mit dieser Massnahme werden besondere Ausführungsformen realisierbar, welche lösbare Verbindungsteile und einfach herstellbare Verbindungsteile kombinierbar und auf den jeweiligen Anwendungsfall optimierbar macht. Dadurch wird eine besonders vielseitig einsetzbare und hoch belastbare Rohrkupplung geschaffen.

Vorzugsweise weist das zumindest eine Innengehäuse einen Längsschlitz auf, wodurch der Innendurchmesser des zumindest einen Innengehäuses beim Verspannen der Rohrkupplung reduzierbar ist sowie die Spannwirkung des zumindest einen Innengehäuses beziehungsweise der Rohrkupplung zusätzlich einstellbar wird.

Bevorzugt weist das zumindest eine Innengehäuse zumindest einen Seitenflansch auf, womit ein Aufnahmeraum für eine Einlage beispielsweise für eine Dichteinlage im zumindest einen Innengehäuse geschaffen wird. Dadurch ist die Einlage im zumindest einen Innengehäuse leicht positionierbar.

Alternativ weist das zumindest eine Innengehäuse sowohl einen Längsschlitz wie auch zumindest einen Seitenflansch auf, wodurch die vorgenannten Vorteile kombiniert vorhanden sind.

Vorzugsweise weist das zumindest eine Innengehäuse entlang seiner Längsachse eine geringere Innengehäusebreite auf als eine Schellenbandbreite des Schellenbands, womit das Schellenband im verspannten Zustand der Rohrkupplung eine erhöhte Spannkraft auf das zumindest eine Innengehäuse ausübt und eine robuste Rohrkupplung, insbesondere für einen breiten industriellen Anwendungsbereich, realisiert wird.

Alternativ weist das zumindest eine Innengehäuse sowohl entlang seiner Längsachse eine geringere Innengehäusebreite als eine Schellenbandbreite des Schellenbands und einen Längsschlitz auf, wodurch die damit verbundenen Vorteile kombiniert vorhanden sind.

Zusätzlich oder alternativ zum Längsschlitz weist das zumindest eine Innengehäuse sowohl entlang seiner Längsachse eine geringere Innengehäusebreite als eine Schellenbandbreite des Schellenbands und zumindest einen Seitenflansch auf, wodurch die damit verbundenen Vorteile kombiniert vorhanden sind.

In einer alternativen Ausführungsform der Rohrkupplung weist das Schellenband zumindest ein erstes Verbindungsteil, welches vorteilhaft als Öffnung oder als Vertiefung ausgebildet ist und zumindest ein weiteres erstes Verbindungsteil auf, welches vorteilhaft als Vorsprung ausgebildet ist, welcher radial nach innen in Richtung der Längsachse des Schellenbands ragt. Weiter weist bei dieser alternativen Ausführungsform das zumindest eine Innengehäuse zumindest ein zweites Verbindungsteil, welches vorteilhaft als Vorsprung ausgebildet ist und nach aussen ragt, sowie zumindest ein weiteres zweites Verbindungsteil auf, welches als Vertiefung oder als Öffnung ausgebildet ist. Dabei ist das zumindest eine zweite Verbindungsteil des zumindest einen Innengehäuses so ausgebildet, dass es in das zumindest erste Verbindungsteil des Schellenbands eingreift. Weiter ist das zumindest eine weitere erste Verbindungsteil des Schellenbands so ausgebildet ist, dass es in das zumindest eine weitere zweite Verbindungsteil des zumindest einen Innengehäuses eingreift. Das gegenseitige Sichern des zumindest einen Innengehäuses mit dem Schellenband ermöglicht eine verbesserte Verspannung des zumindest einen Innengehäuses mit dem Schellenband und die Herstellung einer robusten sowie die Rohrenden sicher verbindenden Rohrkupplung.

In einer weiteren alternativen Ausführungsform umfasst die Verbindungsanordnung mehrere erste Verbindungsteile und mehrere zweiten Verbindungteile, womit eine verbesserte Positionierung des zumindest einen Innengehäuses mit dem Schellenband ermöglicht wird.

Bevorzugt ragt zumindest eines der ersten Verbindungsteile im Schellenband über die Materialdicke des zumindest einen Innengehäuses hinaus und greift in eine vorteilhaft elastische Dichteinlage ein, womit diese Dichteinlage mittels des zumindest einen Verbindungsteils fixierbar ist.

In einer alternativen Ausführungsform der Rohrkupplung weist die Rohrkupplung neben einem Schellenband und dem zumindest einen zumindest bereichsweise darin angeordneten Innengehäuse zumindest ein weiteres Innengehäuse auf, wobei das zumindest eine weitere Innengehäuse im Schellenband ebenfalls zumindest bereichsweise angeordnet ist. Damit sind die jeweiligen zu verbindenden Rohre jeweils von zumindest einem Innengehäuse umgeben und werden durch die Rohrkupplung einfach gehalten. Darüber hinaus ist dadurch eine erweiterte Abwinkelung der beiden Rohre im verbundenen Zustand in der Rohrkupplung möglich.

Vorteilhaft weist das zumindest eine weitere Innengehäuse zumindest ein erstes Verbindungsteil der Verbindungsanordnung auf oder zumindest ein zweites Verbindungsteil der Verbindungsanordnung auf, das in zumindest ein entsprechend ausgebildetes zweites beziehungsweise erstes Verbindungsteil erstreckt. Damit ist auch das eine weitere Innengehäuse von der Verbindungsanordnung sicherbar und ein flexibler Aufbau der Verbindungsandordnung ist möglich.

Alternativ weist das eine weitere Innengehäuse zumindest ein erstes Verbindungsteil der Verbindungsanordnung und sowohl zumindest ein zweites Verbindungsteil der Verbindungsanordnung auf, womit die Verbindungsanordnung zu einer verbesserten Sicherung des zumindest eine weitere Innengehäuse möglich ist. Das gegenseitige Sichern des zumindest einen weiteren Innengehäuses mit dem Schellenband ermöglicht eine verbesserte Verspannung des zumindest einen Innengehäuses mit dem Schellenband und eine einfachere sowie wirtschaftlichere Herstellung einer robusten Rohrkupplung.

Vorzugsweise ist eines der Verbindungsteile der Verbindungsanordnung als Langloch ausgebildet, welches entlang der Längsachse der Rohrkupplung ausgerichtet ist. Dadurch ist die Position des Schellenbands und/oder des zumindest einen Innengehäuses relativ zum zumindest einen weiteren Innengehäuses justierbar. Dadurch ist gegebenenfalls das Schellenband entlang einer durch das Langloch definierten Richtung nachjustierbar. Durch das Langloch wird ein flexibler Ausgleich axialer Bewegungen der zu verbindenden Rohre ermöglicht. Beispielsweise verläuft das zumindest eine Langloch entlang einer Kurve auf der Mantelfläche des Schellenbands, womit ein vergrösserter Abwinkelungsbereich von zwei aufeinandertreffenden Rohren in der Rohrkupplung möglich ist.

Insbesondere weist ein Schellenband, insbesondere zur Verwendung in einer zuvor dargelegten Rohrkupplung, einen Längsschlitz auf, wobei das Schellenband einteilig und flach ausgebildet ist. Weiter weist das Schellenband zumindest einen ersten Aussenbandabschnitt und zumindest einen ersten Innenbandabschnitt auf, welche über zumindest ein Verbindungsmittel verbunden sind. Darüber hinaus weist das Schellenband zumindest ein erstes Verbindungsteil einer Verbindungsanordnung am Schellenband zur Sicherung zumindest eines Innengehäuses im Schellenband auf, wobei die Verbindungsanordnung neben dem zumindest einen ersten Verbindungsteil zumindest ein zweites Verbindungsteil umfasst, wobei das zumindest eine erste Verbindungsteil der Verbindungsanordnung von dem zumindest einen Verbindungsmittel gebildet ist. Damit sind bedarfsweise verschiedene Innengehäuseausführungen (z. B. rohrförmige oder vieleckförmige), insbesondere bei der Verwendung in einer Rohrkupplung zur Verbindung von Rohrenden nach Anspruch 1, sicherbar.

Vorzugsweise weist die Verbindungsanordnung das zumindest eine Verbindungsmittel zum Verbinden des zumindest einen ersten Aussenbandabschnitts mit dem zumindest einen ersten Innenbandabschnitt auf, womit eine einfache und kostensparende Herstellung des Schellenbands realisierbar ist.

Bevorzugt ist das Verbindungsmittel als formschlüssige Verbindung ausgebildet, wodurch eine kostensparende Herstellung bei Gewährleistung einer hohen Sicherheit der Verbindung auch bei hohen Stückzahlen ermöglicht wird.

Alternativ ist das Verbindungsmittel als kraftschlüssige Verbindung ausgebildet, womit eine einstellbare Verspannung des zumindest ersten Aussenbandabschnitts mit dem zumindest ersten Innenbandabschnitt ermöglicht wird.

Alternativ ist das Verbindungsmittel als formschlüssige Verbindung und auch als kraftschlüssige Verbindung ausgebildet. Mit dieser Massnahme werden besondere Ausführungsformen realisierbar, welche lösbare Verbindungsmittel und einfach herstellbare Verbindungsmittel kombinierbar und auf den jeweiligen Anwendungsfall optimierbar machen. Dadurch wird ein besonders vielseitig einsetzbares Schellenband geschaffen.

Vorzugsweise sind die beiden Enden des Schellenbands auf Stoss angeordnet, wodurch das Schellenband entlang eines Grossteils seines Umfangs doppellagig ausgebildet ist. Diese Massnahme bewirkt bei einem geringeren Materialaufwand die Übernahme einer hohen Spannkraft und gewährleistet eine hohe Spannwirkung, welche entlang des nahezu gesamten Umfangs des Schellenbands wirkt und eine kostengünstige Herstellung eines robusten Schellenbands ermöglicht.

Bevorzugt sind die beiden Enden auf Stoss aussenseitig am Innenbandabschnitt des doppellagigen Schellenbands angeordnet, wodurch eine einfache Herstellung auch mit grossen Stückzahlen ermöglicht wird und die Rohkupplung im montierten Zustand leicht auf Beschädigung überprüfbar ist.

Alternativ sind die beiden Enden des Schellenbands auf Stoss innenseitig am Aussenbandabschnitt des doppellagigen Schellenbands angeordnet. Mit dieser innenseitigen Anordnung sind die beiden Enden des Schellenbands zwischen Aussenseite des Schellenbands und des Innenraums des Schellenbands angeordnet, wodurch die Spannkraft des Schellenbands verbessert wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung , die in den Ansprüchen definiert ist, beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: Eine erste Ausführungsform einer erfindungsgemässen Rohkupplung in einer perspektivischen Darstellung,
- Fig. 2: die Rohrkupplung gemäss Figur 1 mit reduzierter Darstellung in einem Schnitt,
- Fig. 3: das Schellenband der Rohrkupplung gemäss Figur 1 in einer perspektivischen Darstellung,
- Fig.4: das Innengehäuse der Rohrkupplung gemäss Figur 1 in einer perspektivischen Darstellung,
- Fig. 5: die Verbindungsanordnung der Rohrkupplung gemäss Figur 1 in einem vergrösserten Detailschnitt,
- Fig. 6: eine weitere Ausführungsform der erfindungsgemässen Rohrkupplung mit reduzierter Darstellung in einer perspektivischen Darstellung,
- Fig. 7: die Rohrkupplung mit reduzierter Darstellung gemäss Figur 6 in einem Schnitt,
- Fig. 8: die Verbindungsanordnung der Rohrkupplung gemäss Figur 6 in einem vergrösserten Detailschnitt,
- Fig. 9: eine weitere Ausführungsform der erfindungsgemässen Rohrkupplung mit reduzierter Darstellung in einer perspektivischen Darstellung,
- Fig. 10: die Rohrkupplung mit reduzierter Darstellung gemäss Figur 9 in einem Schnitt,
- Fig. 11: eine weitere Ausführungsform der erfindungsgemässen Rohrkupplung in einem Schnitt
- Fig. 12: die Verbindungsanordnung der Rohrkupplung gemäss Figur 11 in einem vergrösserten Detailschnitt,
- Fig. 13: eine weitere Ausführungsform der erfindungsgemässen Rohrkupplung mit reduzierter Darstellung in einer perspektivischen Darstellung,
- Fig. 14: die Rohrkupplung mit reduzierter Darstellung gemäss Figur 13 in einer perspektivischen Darstellung,
- Fig. 15: die beiden Innengehäuse der Rohrkupplung gemäss Figur 13 in einer separaten perspektivischen Darstellung
- Fig. 16: eine Rohrkupplungsanordnung in einer perspektivischen Darstellung, und
- Fig. 17: eine alternative Verbindungsanordnung für eine der Rohrkupplung nach einer der vorhergehenden Figuren 1 bis 16 in einem vergrösserten Detailschnitt.

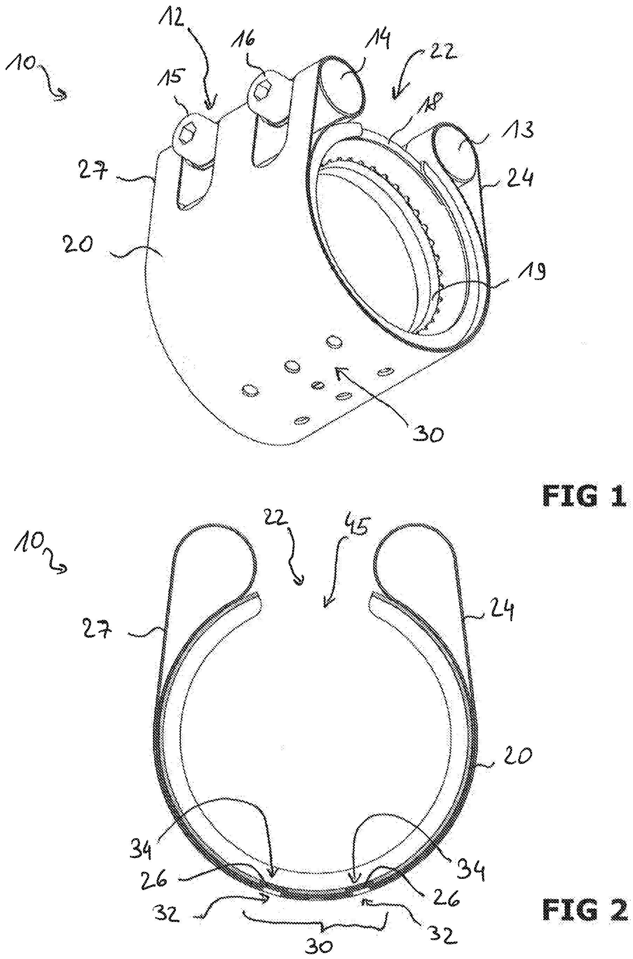

Die in den Figuren 1 bis 5 gezeigte Rohrkupplung 10 zum Verbinden zweier Rohrenden umfasst ein Schellenband 20, welches aus einem flachen Blechstreifen gefertigt ist. Das einteilige Schellenband 20 weist zwei Laschen 24 und 27 auf, welche je einen Bereich aufweisen, der der jeweiligen anderen Lasche 24 und 27 zugewandt ist. Die Laschen 24 und 27 sind voneinander beabstandet und zwischen diesen ist ein Längsschlitz 22 des Schellenbands 20 ausgebildet. Das Schellenband 20 ist ausser im Bereich der Laschen 24 bzw. 27 doppellagig ausgeführt. Die Enden 31 und 33 des Schellenbands 20 sind auf der dem Längsschlitz 22 gegenüberliegenden Seite des Schellenbands 20 innenseitig auf Stoss 29 angeordnet. Dort weist das Schellenband 20 weiter eine Verbindungsanordnung 30 zur Sicherung des darin angeordneten Innengehäuses 40 in axialer Richtung auf. Die Rohrkupplung 10 umfasst einen Spannmechanismus 12, welcher abhängig von der Ausführungsform der Rohrkupplung unterschiedlich ausgebildet sein kann. Der hier dargestellte Spannmechanismus 12 umfasst zwei Spannbolzen 13 und 14, welche jeweils einzeln in den beiden Laschen 24 und 27 des Schellenbands 20 angeordnet sind, und zwei Spannmittel 15 und 16. Die Spannmittel 15 und 16 sind mit dem ersten Spannbolzen 13 verbunden. Beispielsweise greifen die freien, mit Aussengewinde versehenen Enden der Spannmittel 15 und 16 in ein am Spannbolzen 13 ausgebildetes Innengewinde ein. Der Spannbolzen 14 weist jeweils eine Durchführung für das Spannmittel 15 und für das Spannmittel 16 auf. Durch die Betätigung des Antriebmittels der Spannmittel 15 und 16 werden die Spannbolzen 13 und 14 relativ zueinander bewegt und dabei die Rohrkupplung 10 verspannt. Die Rohkupplung 10 umfasst weiter ein Überbrückungselement 18 zur Überbrückung des Längsschlitzes 22 und eine innenseitige Dichteinlage 19.

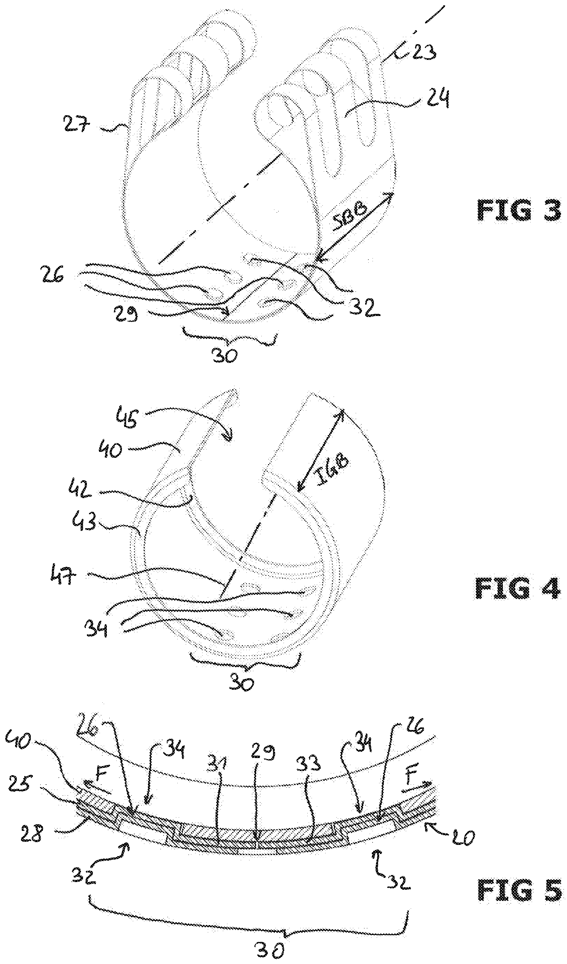

Die Verbindungsanordnung 30 umfasst erste Verbindungsteile 32 und zweite Verbindungsteile 34, wobei die ersten Verbindungsteile 32 in die zweiten Verbindungsteile 34 eingreifen (siehe insb. Fig. 2 und 5). In dieser Ausführungsform sind die ersten Verbindungsteile 32 am Schellenband 20 angeordnet und die zweiten Verbindungsteile 34 am Innengehäuse 40 angeordnet. Die ersten Verbindungsteile 32 greifen spielfrei in die zweiten Verbindungsteile 34 ein. Somit wird das Innengehäuse 40 im Schellenband 20 allseitig gesichert und eine unerwünschte Positionierung unterbunden. Die Materialdicke des Innengehäuses 40 ist hier grösser als die Materialdicke einer Lage des Schellenbands 20.

Die mehreren ersten Verbindungsteile 32 am Schellenband 20 sind jeweils als Vorsprung ausgebildet (siehe Fig. 3), welche radial nach innen in Richtung der Längsachse 23 des Schellenbands 20 ragen. Das Schellenband 20 ist in diesen Bereichen doppellagig ausgebildet, wobei der Aussenbandabschnitt 28 mit den Innenbandabschnitten 25 jeweils mittels eines Verbindungsmittels 26 verbunden ist. In der dargestellten Ausführungsform ist das Verbindungsmittel 26 als formschlüssige Clinchverbindung ausgebildet und die beiden Enden 31 und 33 des Schellenbands 20 sind auf der Innenseite des Schellenbands 20 auf Stoss 29 gelegt.

Das rohrförmige Innengehäuse 40 ist an seinen axialen Enden umgebogen (siehe Fig. 4). Die dadurch entstehenden Seitenflansche 42, 43 dienen zur Sicherung der Dichteinlage 19 im Innengehäuse 40 der Rohrkupplung 10. Das Innengehäuse 40 weist mehrere zweite Verbindungsteile 34 auf, welche hier jeweils als Rundloch ausgebildet sind. Die mehreren zweiten Verbindungsteile 34 sind gegenüber eines Längsschlitzes 45 des Innengehäuses 40 angeordnet. Das Innengehäuse 40 weist entlang seiner Längsachse 47 eine geringere Innengehäusebreite IGB als die Schellenbandbreite SBB des Schellenbands 20 auf.

Die Verbindungsanordnung 30 der Rohrkupplung 10 mit den ersten Verbindungsteilen 32 am Schellenband 20, welche als Vorsprünge ausgebildet sind, und mit den zweiten Verbindungsteilen 34 am Innengehäuse 40, welche als Rundlöcher ausgebildet sind, greifen ineinander ein und sichern somit das Innengehäuse 40 allseitig und insbesondere gegen eine Verschiebung des Innengehäuses 40 relativ zum Schellenband 20 in die axiale Richtung (Fig. 5). Dabei erfolgt ein Mittragen des Innengehäuses 40 bei der Verspannung der Rohrkupplung 10, da auf die ersten Verbindungsteile 32 eine entlang des Mantelumfangs des Innengehäuses 40 gerichtete Spannkraft F wirkt, welche jeweils in die vom Stoss 29 entfernende Richtung gerichtet ist. Weiter wird bei der passgenauen Auslegung der Vorsprünge der ersten Verbindungsteile 32 in Bezug auf die Rundlöcher der zweiten Verbindungsteile 34 eine spielfreie Sicherung des Innengehäuses 40 realisiert.

Alternativ zu den Vorsprüngen oder Öffnungen können auch weitere Verbindungsteile für eine kraftschlüssige oder formschlüssige Verbindung verwendet werden. Weiter ist das Verbindungsmittel 26, welches den jeweiligen Innenbandabschnitt 25 mit dem Aussenbandabschnitt 28 des Schellenbands 20 verbindet, gleichzeitig als erstes Verbindungsteil 32 ausgebildet.

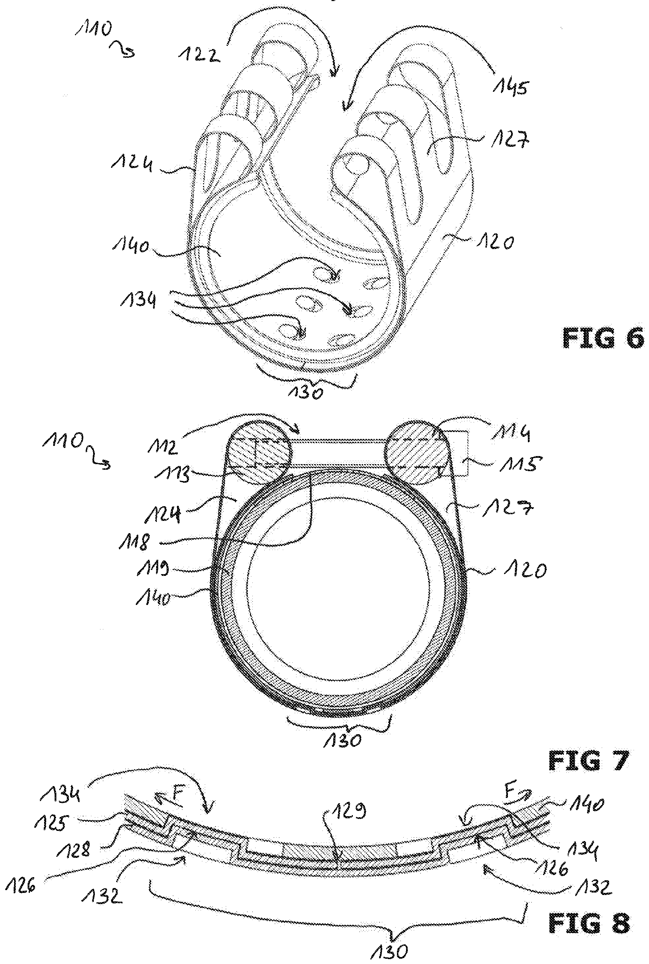

Figuren 6 bis 8 zeigen eine Rohrkupplung 110 mit dem Schellenband 120, welches analog zum Schellenband 20 ausgebildet ist, aber mit einem alternativ ausgeführten Innengehäuse 140. Die Verbindungsanordnung 130 besteht ebenfalls aus den mehreren ersten Verbindungsteilen 132 und aus den mehreren zweiten Verbindungsteilen 134. Die ersten Verbindungsteile 132 sind als Vorsprünge am Schellenband 120 ausgebildet und die zweiten Verbindungsteile 134 sind jeweils als Langlöcher am Innengehäuse 140 ausgebildet, wobei sich die Längsseiten der Langlöcher entlang des Umfangs des rohrförmigen Innengehäuses 140 erstrecken. Die Längsseite eines Langlochs verlaufen parallel entlang der Mantelfläche des Innengehäuses 140. Unter einem Langloch wird ein Loch verstanden, das zueinander in einer Breite beabstandete sowie zueinander gleich, insbesondere parallel, verlaufende Seiten aufweist, deren Enden durch Halbkreise abgeschlossen werden, wobei die Durchmesser der Halbkreise der Breite des Langlochs entsprechen. Die Verbindungsanordnung 130 ist entlang der Längsachse der Rohrkupplung 10 spielfrei ausgebildet. Die mehreren zweiten Verbindungsteile 134 sind gegenüber des Längsschlitz 145 des Innengehäuses 140 angeordnet.

Das grösstenteils doppellagig verlaufende Schellenband 120 bildet zwei Laschen 124 und 127 aus, welche durch einen Längsschlitz 122 beabstandet sind und jeweils einen Spannbolzen 113, 114 aufnehmen. Der Spannmechanismus 112 ist hier analog zu der in Fig. 1 bis 5 dargestellten Ausführungsform ausgeführt.

Die Verbindungsanordnung 130 mit den ersten Verbindungsteilen 132 am Schellenband 120, welche als Vorsprünge ausgebildet sind, und mit den zweiten Verbindungsteilen 134 am Innengehäuse 140, welche als Langlöcher ausgebildet sind, greifen ineinander ein und sichern somit das Innengehäuse 140 (Fig. 8). Dabei erstrecken sich die ersten Verbindungsteile 132 in die zweiten Verbindungsteile 134, wobei die ersten Verbindungsteile 132 an den vom Stoss 129 beabstandeten Seiten der zweiten Verbindungsteilen 134 anliegen. Die ersten Verbindungsteile 132 werden beim Verspannen der Spannmittel 115 und 116 mit einer Spannkraft F beaufschlagt, welche die ersten Verbindungsteile 132 an die jeweilige Seite der zweiten Verbindungsteile 134 drückt, welche vom Stoss 129 beabstandet ist. Damit wird ein Mittragen des Innengehäuses 140 beim Verspannen des Schellenbands 120 bewirkt.

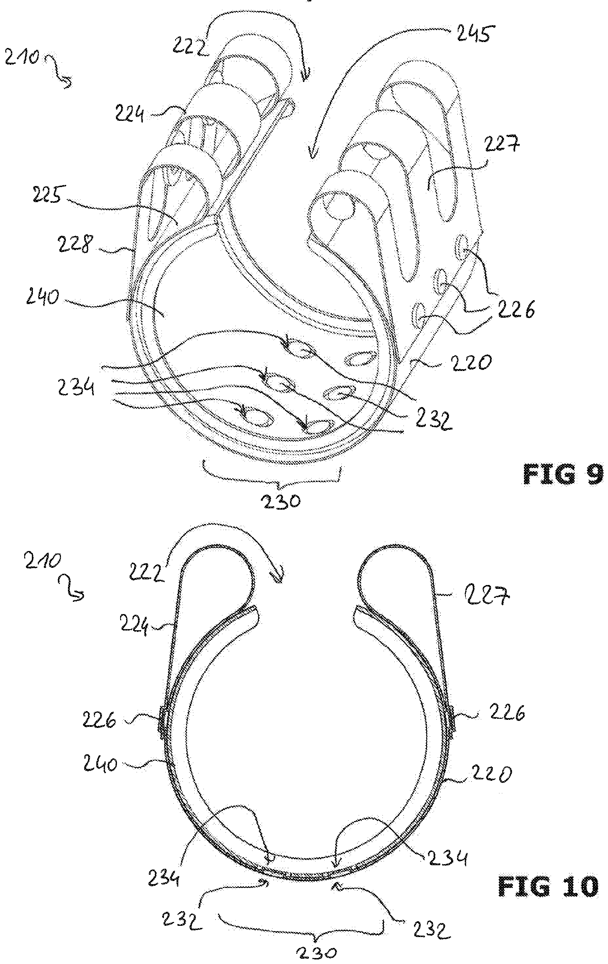

Figuren 9 und 10 zeigen eine Rohrkupplung 210 mit einem alternativ ausgeführten Schellenband 220 und einem Innengehäuse 240, welches im Schellenband 220 angeordnet ist und in der Ausgestaltung dem zuvor beschriebenen Innengehäuse 40 oder 140 entspricht. Das Schellenband 220 ist einlagig ausgebildet, wobei der Aussenbandabschnitt 228 mit den Innenbandabschnitten 225 jeweils im Bereich der Laschen 224 bzw. 227 mittels den Verbindungsmittel 226 verbunden sind. Das Schellenband 220 weist als erste Verbindungsteile 232 Vorsprünge auf, welche sich in die zweiten Verbindungsteile 234 des Innengehäuses 240 erstrecken, die als Öffnungen ausgebildet sind.

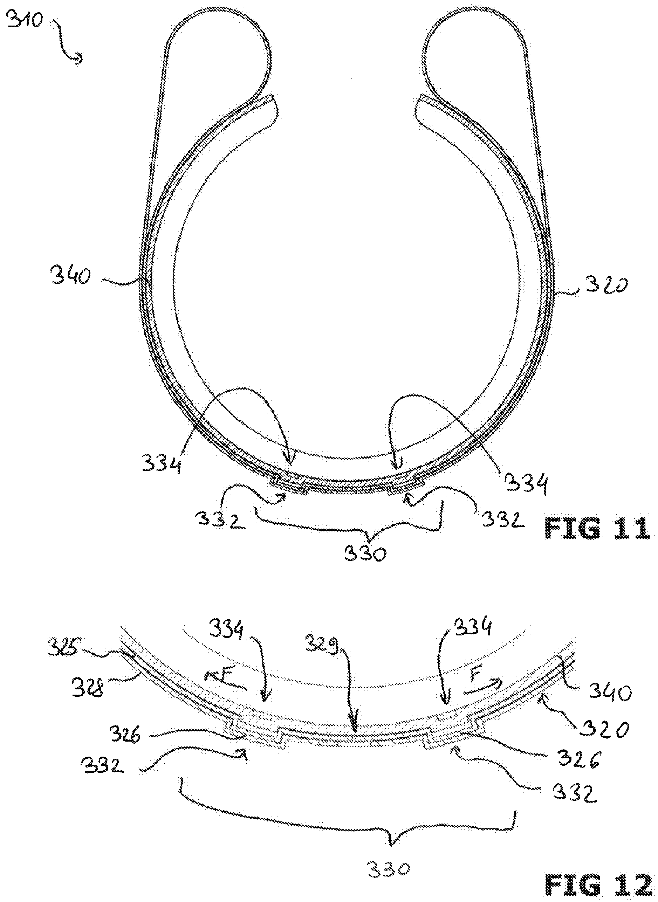

Die Figuren 11 und 12 zeigen eine weitere alternative Ausführungsform der Rohrkupplung 310 (ohne dargestellten Spannmechanismus) mit einem Schellenband 320 und einem Innengehäuse 340 sowie einer Verbindungsanordnung 330 mit mehreren Verbindungsteilen 332 und 334. Die ersten Verbindungsteile 332 sind jeweils als Vorsprung am Schellenband 320 ausgebildet und die zweiten Verbindungsteile 334 sind als Vorsprünge am Innengehäuse 340 ausgebildet. Die Vorsprünge am Schellenband 320 weisen an Ihrer Innenseite Vertiefungen auf.

Die zweiten Verbindungsteile 334 erstrecken sich in die ersten Verbindungsteile 332, wobei die zweiten Verbindungsteile 334 passgenau und spielfrei in die ersten Verbindungsteile 332 eingreifen. Die erste Verbindungsteile 332 sind weiter als Verbindungsmittel 326 ausgebildet und verbinden die Aussenbandabschnitte 328 mit den Innenbandabschnitten 325 des Schellenbands 320. Die zweiten Verbindungsteile 334 werden beim Verspannen der Spannmittel 115 und 116 mit einer Spannkraft F beaufschlagt, welche die zweiten Verbindungsteile 334 an die jeweilige Seite der ersten Verbindungsteile 332 drückt, welche vom Stoss 329 beabstandet ist.

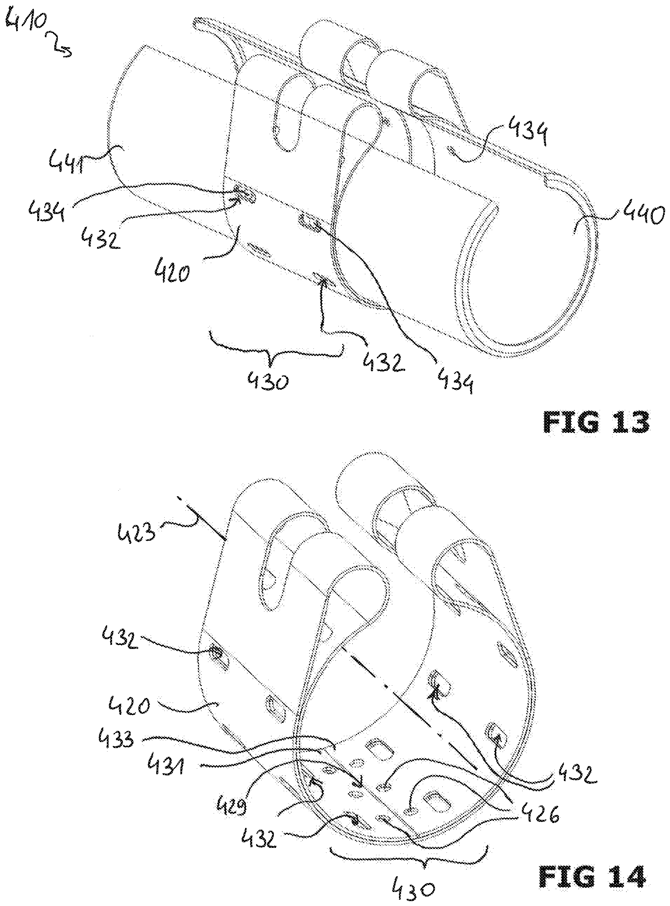

Figuren 13 bis 15 zeigen eine Rohrkupplung 410 (ohne dargestellten Spannmechanismus) mit einem Schellenband 420 und einem ersten Innengehäuse 440 sowie einem zweiten Innengehäuse 441, welche beide zumindest bereichsweise im Schellenband 420 angeordnet sind. Weiter wird eine Verbindungsanordnung 430 mit mehreren Verbindungsteilen 432 und 434 gezeigt, wobei die ersten Verbindungsteile 432 am Schellenband 420 angeordnet sind und die zweiten Verbindungsteile 434 jeweils an den beiden Innengehäuse 440 und 441 angeordnet sind. Die ersten Verbindungsteile 432 sind als Öffnungen am Schellenband 420 ausgebildet und die zweiten Verbindungsteile 434 sind als Vorsprünge an den beiden Innengehäuse 440 und 441 ausgebildet. Die Vorsprünge der beiden Innengehäuse 440 und 441 greifen dabei in die Öffnungen am Schellenband 420 ein.

Die mehreren Verbindungsteile 432 am Schellenband 420 sind jeweils als Langlöcher ausgebildet, welche entlang der Richtung der Längsachse 423 des Schellenbandes 420 an der Mantelfläche des Schellenbands 420 verlaufen (Fig. 14). Das Schellenband 420 ist in diesen Bereichen doppellagig ausgebildet, wobei der Aussenbandabschnitt 428 mit den Innenbandabschnitten 425 mittels Verbindungsmittel 426 verbunden ist und die beiden Enden 431 und 433 des Schellenbands 420 innenseitig am Aussenbandabschnitt 428 auf Stoss 429 liegen. Alternativ ist auch ein einlagiges Schellenband in dieser Ausführungsform möglich (nicht gezeigt). Beispielsweise verlaufen die Langlöcher entlang einer Kurve auf der jeweiligen Mantelfläche der beiden Innengehäuses 440 und 441 oder am Schellenbands 420 (nicht gezeigt), womit die Variabilität in der Abwinkelung der zu verbindenden Rohre zueinander gegeben ist und die Längsachsenfehlausrichtung der beiden aufeinandertreffenden Rohre kompensiert wird.

Die rohrförmigen Innengehäuse 440 und 441 sind an Ihren einander abgewandten axialen Enden umgebogen. Die dadurch entstehenden Seitenflansche 442, 443 dienen zur Sicherung der Dichteinlage 419 in den beiden Innengehäusen 440 und 410 der Rohrkupplung 410.

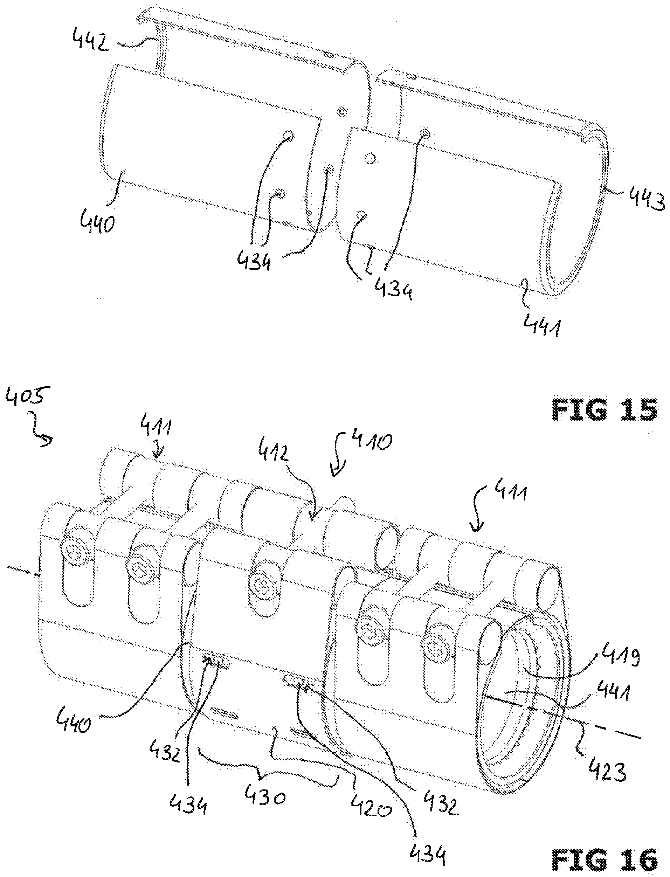

Die rohrförmigen Innengehäuse 440 und 441 weisen an den axialen Endbereichen, welche den Seitenflanschen 442 bzw. 443 gegenüberliegen, mehrere Verbindungsteile 434 auf, welche auf der Mantelfläche des jeweiligen Innengehäuses 440 und 441 als radial umlaufend und radial nach aussen ragende Vorsprünge ausgebildet sind (Fig. 15).

Fig 16. zeigt eine Rohrkupplungsanordnung 405, die eine Rohrkupplung 410 und zwei Rohrkupplungen 411 umfasst. Die beiden Innengehäuse 440 und 441 sind mithilfe deren als Vorsprung ausgebildeten zweiten Verbindungsmittel 434 im Schellenband 420 der Rohrkupplung 410 angeordnet und werden dort von den als Langlöcher ausgebildeten ersten Verbindungsteilen 432 gehalten. Die Langlöcher am Schellenband 420 erlauben somit den darin angeordneten Vorsprüngen der beiden Innengehäuse 440 und 441 eine definierte und begrenzte Bewegung entlang und quer zu der Längsachse 423 des Schellenbands 420.

Die in den jeweiligen Innengehäuse 440 und 441 gesicherten Rohre (nicht gezeigt), werden von den beiden Rohrkupplungen 411 gehalten und mithilfe deren Spannmechanismen verspannt. Die Rohrkupplungen 411 sind dabei als herkömmliche Rohrkupplungen ausgebildet oder analog zu den Rohrkupplungen 410 ausgebildet.

In den Figuren 1 bis 16 sind die Verbindungsmittel als formschlüssige Clinchverbindung ausgebildet. Anstatt der Clinchverbindung oder ergänzend dazu sind auch alternative formschlüssige Verbindungsmittel sowie auch kraftschlüssige Verbindungsmittel einsetzbar. Dazu zählen als nicht abschliessende Aufzählung Schauben, Nieten oder Passstifte.

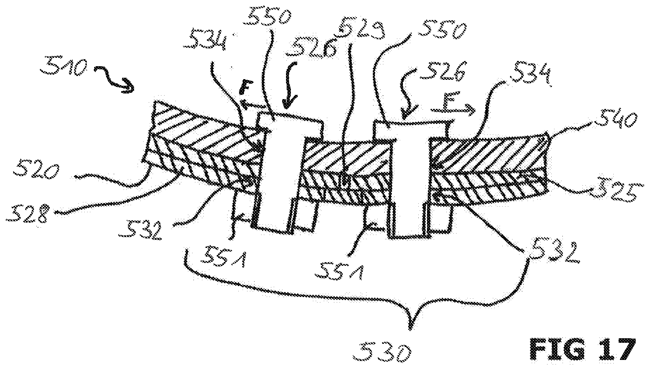

Figur 17 zeigt eine weitere Ausführungsform einer Verbindungsanordnung 530, welche alternativ zu den dort dargestellten Verbindungsanordnungen 30, 130, 230, 330 und 430 an einer der vorher gezeigten Rohrkupplungen 10, 110, 210, 310 und 410 angeordnet sein kann. Die Verbindungsanordnung 530 umfasst erste Verbindungsteile 532 am Schellenband 520, welche als Öffnungen ausgebildet sind, sowie zweite Verbindungsteile 534 am Innengehäuse 540, welche ebenfalls als Öffnungen ausgebildet sind. Weiter umfasst die Verbindungsanordnung 530 Verbindungsmittel 526, welche als Schrauben 550 mit Muttern 551 ausgebildet sind. Die Schrauben 550 erstrecken sich jeweils durch die Verbindungsteile 532 und durch die zweiten Verbindungsteile 534. Die Schrauben 550 weisen auf einem der Innenseite der Rohrkupplung 510 zugewandten Schraubenende einen Anschlag auf, insbesondere einen Schraubenkopf, der gegen das Innengehäuse 540 drückt. Das der Aussenseite der Rohrkupplung 510 zugewandte Schraubenende ist mit einer Mutter 551 versehen. Im angezogenen Zustand des Verbindungsmittels 526 drückt die Mutter gegen die Aussenseite des Schellenbands 520 der Rohrkupplung 510. Dieses Verbindungsmittel 526 ermöglicht somit eine einstellbare und lösbare Sicherung des Innengehäuses 540 mit dem Schellenband 520. Die ersten Verbindungsteile 532 werden beim Verspannen des Spannmechanismus der Rohrkupplung 510 mit einer Spannkraft F beaufschlagt, welche über die Verbindungsmittel 526 an die zweiten Verbindungsteile 534, übertragen wird, womit ein mittragendes Innengehäuse 540 in der Rohrkupplung 510 realisiert wird.

### Bezugszeichenliste

| | | | |
|---|---|---|---|
| 10 | Rohrkupplung | 114 | zweiter Spannbolzen |
| 12 | Spannmechanismus | 115 | erstes Spannmittel |
| 13 | erster Spannbolzen | 118 | Überbrückungselement |
| 14 | zweiter Spannbolzen | 119 | Dichteinlage |
| 15 | erstes Spannmittel | 120 | Schellenband |
| 16 | zweites Spannmittel | 122 | Längsschlitz von 20 |
| 18 | Überbrückungselement | 124 | erste Lasche |
| 19 | Dichteinlage | 125 | Innenbandabschnitt |
| 20 | Schellenband | 126 | Verbindungsmittel |
| 22 | Längsschlitz von 20 | 127 | zweite Lasche |
| 23 | Längsachse von 20 | 128 | Aussenbandabschnitt |
| 24 | erste Lasche | 129 | Stoss |
| 25 | Innenbandabschnitt | 130 | Verbindungsanordnung |
| 26 | Verbindungsmittel | 132 | erstes Verbindungsteil |
| 27 | zweite Lasche | 134 | zweites Verbindungsteil |
| 28 | Aussenbandabschnitt | 140 | Innengehäuse |
| 29 | Stoss | 145 | Längsschlitz von 40 |
| 30 | Verbindungsanordnung | | |
| 31 | erstes Ende von 20 | 210 | Rohrkupplung |
| 32 | erstes Verbindungsteil | 220 | Schellenband |
| 33 | zweite Ende von 20 | 222 | Längsschlitz von 220 |
| 34 | zweites Verbindungsteil | 224 | erste Lasche |
| 40 | Innengehäuse | 225 | Innenbandabschnitt |
| 42 | erster Seitenflansch | 226 | Verbindungsmittel |
| 43 | zweiter Seitenflansch | 227 | zweite Lasche |
| 45 | Längsschlitz von 40 | 228 | Aussenbandabschnitt |
| 47 | Längsachse von 40 | 230 | Verbindungsanordnung |
| | | 232 | erstes Verbindungsteil |
| 110 | Rohrkupplung | 234 | zweites Verbindungsteil |
| 112 | Spannmechanismus | 240 | Innengehäuse |
| 113 | erster Spannbolzen | 245 | Längsschlitz von 240 |
| 310 | Rohrkupplung | 526 | Verbindungsmittel |
| 320 | Schellenband | 528 | Aussenbandabschnitt |
| 325 | Innenbandabschnitt | 529 | Stoss |
| 326 | Verbindungsmittel | 530 | Verbindungsanordnung |
| 327 | zweite Lasche | 532 | erstes Verbindungsteil |
| 328 | Aussenbandabschnitt | 534 | zweites Verbindungsteil |
| 329 | Stoss | 540 | Innengehäuse |
| 330 | Verbindungsanordnung | 550 | Schraube |
| 332 | erstes Verbindungsteil | 551 | Mutter |
| 334 | zweites Verbindungsteil | | |
| 340 | Innengehäuse | IGB | Innengehäusebreite |
| | | SBB | Schellenbandbreite |
| 405 | Rohrkupplungsanordnung | F | Spannkraft |
| 410 | Rohrkupplung | | |
| 411 | weitere Rohrkupplung | | |
| 419 | Dichteinlage | | |
| 420 | Schellenband | | |
| 423 | Längsachse von 420 | | |
| 425 | Innenbandabschnitt | | |
| 426 | Verbindungsmittel | | |
| 427 | zweite Lasche | | |
| 428 | Aussenbandabschnitt | | |
| 429 | Stoss | | |
| 430 | Verbindungsanordnung | | |
| 431 | erstes Ende von 420 | | |
| 432 | erstes Verbindungsteil | | |
| 433 | zweite Ende von 420 | | |
| 434 | zweites Verbindungsteil | | |
| 440 | erstes Innengehäuse | | |
| 441 | zweites Innengehäuse | | |
| 510 | Rohrkupplung | | |
| 525 | Innenbandabschnitt | | |

## Patentansprüche

1. Rohrkupplung (10; 110; 210; 310; 410; 510) zum Verbinden zweier Rohrenden umfassend ein Schellenband (20; 120; 220; 320; 420; 520) und zumindest ein zumindest bereichsweise darin angeordnetes Innengehäuse (40; 140; 240; 340; 440, 441; 540), wobei das Schellenband (20; 120; 220; 320; 420; 520) einen Längsschlitz (22; 122; 222) aufweist, und einen Spannmechanismus (12; 112; 212; 412) zur Reduktion des Innendurchmessers des Schellenbandes (20; 120; 220; 320; 420; 520), wobei das Schellenband (20; 120; 220; 320; 420; 520) weiter aus einem einteiligen und flachen Streifen gefertigt ist sowie zumindest einen ersten Aussenbandabschnitt (28; 128; 228; 328, 428, 528) und zumindest einen ersten Innenbandabschnitt (25; 125; 225; 325, 425, 525) aufweist, welche über zumindest ein Verbindungsmittel (26; 126; 226; 326; 426; 526) verbunden sind, wobei eine Verbindungsandordnung (30; 130; 230; 330; 430; 530) zur Sicherung des zumindest einen Innengehäuses (40; 140; 240; 340; 440, 441; 540) im Schellenband (20; 120; 220; 320; 420; 520) vorgesehen ist, welche aus zumindest einem ersten Verbindungsteil (32; 132; 232; 332; 432; 532) und zumindest einem zweiten Verbindungsteil (34; 134; 234; 334; 434; 534) besteht, wobei sich das zumindest eine erste Verbindungsteil (32; 132; 232; 332; 432; 532) in das zumindest eine zweite Verbindungsteil (34; 134; 234; 334; 434; 534) erstreckt, **dadurch gekennzeichnet, dass** zumindest eines der Verbindungsteile (32, 34; 132, 134; 232, 234; 332, 334; 432, 434; 532, 534) der Verbindungsanordnung (30; 130; 230; 330; 430; 530) als das zumindest eine Verbindungsmittel (26; 126; 226; 326; 426; 526) zum Verbinden des zumindest ersten Aussenbandabschnitts (28; 128; 228; 328; 428; 528) mit dem zumindest ersten Innenbandabschnitt (25; 125; 225; 325; 425; 525) ausgebildet ist.

2. Rohrkupplung nach Anspruch 1, **dadurch gekennzeichnet, dass** zumindest eines der Verbindungsteile (32, 34; 132, 134; 232, 234; 332, 334; 432, 434; 532, 534) eine Ausnehmung aufweist.

3. Rohrkupplung nach Anspruch 1 oder 2, **dadurch gekennzeichnet, dass** zumindest eines der Verbindungsteile (32, 34; 132, 134; 232, 234; 332, 334; 432, 434; 532, 534) als Öffnung, insbesondere als Rundloch und/oder Langloch, ausgebildet ist.

4. Rohrkupplung nach einem der Ansprüche 1 bis 3, **dadurch gekennzeichnet, dass** das zumindest eine erste Verbindungsteil (32; 132; 232; 332; 432; 532) passgenau in das zumindest eine zweite Verbindungsteil (34; 134; 234; 334; 434; 534) eingreift.

5. Rohrkupplung nach Anspruch 3 oder 4, **dadurch gekennzeichnet, dass** sich das zumindest eine erste Verbindungsteil (32; 132; 232; 332; 432; 532) über das zumindest eine zweite Verbindungsteil (34; 134; 234; 334; 434; 534) hinaus erstreckt.

6. Rohrkupplung nach einem der Ansprüche 1 bis 5, **dadurch gekennzeichnet, dass** das zumindest eine erste Verbindungsteil (32; 132; 232; 332; 432; 532) am Schellenband (20; 120; 220; 320; 420; 520) angeordnet ist und dass zumindest eine zweite Verbindungsteil (34; 134; 234; 334; 434; 534) am zumindest einen Innengehäuse (40; 140; 240; 340; 440, 441; 540) angeordnet ist.

7. Rohrkupplung nach einem der Ansprüche 1 bis 6, **dadurch gekennzeichnet, dass** die Verbindungsanordnung (30; 130; 230; 330; 430; 530) das zumindest eine Verbindungsmittel (26; 126; 226; 326; 426; 526) zum Verbinden des zumindest ersten Aussenbandabschnitts (28; 128; 228; 328; 428; 528) mit dem zumindest ersten Innenbandabschnitt (25; 125; 225; 325; 425; 525) aufweist.

8. Rohrkupplung nach einem der Ansprüche 1 bis 7, **dadurch gekennzeichnet, dass** zumindest ein erstes Verbindungsteil (32; 132; 232; 332) der Verbindungsanordnung (30; 130; 230; 330; 430; 530) am Schellenband (20; 120; 220; 320; 420; 520) und zumindest ein zweites Verbindungsteil (34; 134; 234; 334; 434; 534) der Verbindungsanordnung (30; 130; 230; 330; 430; 530) am zumindest einen Innengehäuse (40; 140; 240; 340; 440, 441; 540) als Öffnung ausgebildet sind, wobei sich das zumindest eine Verbindungsmittel (26; 126; 226; 326; 426; 526) zum lösbaren Verbinden des Schellenbands (20; 120; 220; 320; 420; 520) mit dem zumindest einen Innengehäuse (40; 140; 240; 340; 440, 441; 540) durch die jeweiligen Öffnungen erstreckt.

9. Rohrkupplung nach einem der Ansprüche 1 bis 8, **dadurch gekennzeichnet, dass** die Verbindungsanordnung (30; 130; 230; 330; 430; 530) in einem Bereich gegenüber des Längsschlitzes (22; 122; 222) des Schellenbands (20; 120; 220; 320; 420; 520) angeordnet ist und/oder die beiden Enden (31, 33; 431, 433) des Schellenbands (20; 120; 220; 320; 420; 520) auf Stoss (29; 129; 229; 329; 429; 529) angeordnet sind.

10. Rohrkupplung nach einem der Ansprüche 1 bis 9, **dadurch gekennzeichnet, dass** die Verbindungsanordnung (30; 130; 230; 330; 430; 530) als formschlüssige Verbindung und/oder als kraftschlüssige Verbindung ausgebildet ist.

11. Rohrkupplung nach einem der Ansprüche 1 bis 10, **dadurch gekennzeichnet, dass** das zumindest eine Innengehäuse (40; 140; 240; 340; 440, 441; 540) einen Längsschlitz (45; 145; 245) aufweist und/oder zumindest einen Seitenflansch (42, 43; 142, 143; 242; 243; 442; 443) aufweist und/oder vorteilhaft das zumindest eine Innengehäuse (40; 140; 240; 340; 440, 441; 540) entlang seiner Längsachse eine geringere Innengehäusebreite (IGB) aufweist als eine Schellenbandbreite (SBB) des Schellenbandes (20; 120; 220; 320; 420; 520).

## Claims

1. A pipe coupling (10; 110; 210; 310; 410; 510) for connecting two pipe ends, comprising a clamp band (20; 120; 220; 320; 420; 520) and at least one inner housing (40; 140; 240; 340; 440; 441; 540) arranged at least regionally therein, wherein the clamp band (20; 120; 220; 320; 420; 520) has a longitudinal slot (22; 122; 222), and a clamping mechanism (12; 112; 212; 412) for reducing the internal diameter of the clamp band (20; 120; 220; 320; 420; 520), wherein the clamp band (20; 120; 220; 320; 420; 520) is further made out of a single piece flat strip, and also has at least one first outer band portion (28; 128; 228; 328; 428; 528) and at least one first inner band portion (25; 125; 225; 325; 425; 525), which are connected via at least one connection means (26; 126; 226; 326; 426; 526), wherein a connection assembly (30; 130; 230; 330; 430; 530) is provided for securing the at least one inner housing (40; 140; 240; 340; 440; 441; 540) in the clamp band (20; 120; 220; 320; 420; 520), which consists of at least one first connection part (32; 132; 232; 332; 432; 532) and at least one second connection part (34; 134; 234; 334; 434; 534), wherein the at least one first connection part (32; 132; 232; 332; 432; 532) extends into the at least one second connection part (34; 134; 234; 334; 434; 534), **characterized in that** at least one of the connection parts (32, 34; 132, 134; 232, 234; 332, 334; 432, 434; 532, 534) of the connection assembly (30; 130; 230; 330; 430; 530) is designed as the at least one connection means (26; 126; 226; 326; 426; 526) for connecting the at least one outer band portion (28; 128; 228; 328; 428; 528) with the at least one first inner band portion (25; 125; 225; 325; 425; 525).

2. The pipe coupling according to claim 1, **characterized in that** at least one of the connection parts (32, 34; 132, 134; 232, 234; 332, 334; 432, 434; 532, 534) has a recess.

3. The pipe coupling according to claim 1 or 2, **characterized in that** at least one of the connection parts (32, 34; 132, 134; 232, 234; 332, 334; 432, 434; 532, 534) is designed as an opening, in particular as a round hole and/or oblong hole.

4. The pipe coupling according to one of claims 1 to 3, **characterized in that** the at least one first connection part (32; 132; 232; 332; 432; 532) engages precisely into the at least one second connection part (34; 134; 234; 334; 434; 534) .

5. The pipe coupling according to claim 3 or 4, **characterized in that** the at least one first connection part (32; 132; 232; 332; 432; 532) extends beyond the at least one second connection part (34; 134; 234; 334; 434; 534) .

6. The pipe coupling according to one of claims 1 to 5, **characterized in that** at least one first connection part (32; 132; 232; 332; 432; 532) is arranged on the clamp band (20; 120; 220; 320; 420; 520), and that at least one second connection part (34; 134; 234; 334; 434; 534) is arranged on at least one inner housing (40; 140; 240; 340; 440; 441; 540).

7. The pipe coupling according to one of claims 1 to 6, **characterized in that** the connection assembly (30; 130; 230; 330; 430; 530) has the at least one connection means (26; 126; 226; 326; 426; 526) for connecting the at least first outer band portion (28; 128; 228; 328; 428; 528) with the at least first inner band portion (25; 125; 225; 325; 425; 525).

8. The pipe coupling according to one of claims 1 to 7, **characterized in that** at least one first connection part (32; 132; 232; 332; 432; 532) of the connection assembly (30; 130; 230; 330; 430; 530) is formed on the clamp band (20; 120; 220; 320; 420; 520) and at least one second connection part (34; 134; 234; 334; 434; 534) of the connection assembly (30; 130; 230; 330; 430; 530) is formed on the at least one inner housing (40; 140; 240; 340; 440; 441; 540) as an opening, wherein the at least one connection means (26; 126; 226; 326; 426; 526) for detachably connecting the clamp band (20; 120; 220; 320; 420; 520) with the at least one inner housing (40; 140; 240; 340; 440; 441; 540) extends through the respective openings.

9. The pipe coupling according to one of claims 1 to 8, **characterized in that** the connection assembly (30; 130; 230; 330; 430; 530) is arranged in an area opposite the longitudinal slot (22; 122; 222) of the clamp band (20; 120; 220; 320; 420; 520) and/or the two ends (31, 33; 431, 433) of the clamp band (20; 120; 220; 320; 420; 520) are arranged on an abutment (29; 129; 229; 329; 429; 529) .

10. The pipe coupling according to one of claims 1 to 9, **characterized in that** the connection assembly (30; 130; 230; 330; 430; 530) is designed as a positive connection and/or as a non-positive connection.

11. The pipe coupling according to one of claims 1 to 10, **characterized in that** the at least one inner housing (40; 140; 240; 340; 440; 441; 540) has a longitudinal slot (45; 145; 245) and/or at least one side flange (42, 43; 142, 143; 242; 243; 442; 443) and or the at least one inner housing (40; 140; 240; 340; 440; 441; 540) has a smaller inner housing width (IGB) along its longitudinal axis than a clamp band width (SBB) of the clamp band (20; 120; 220; 320; 420; 520).

## Revendications

1. Raccord de tube (10 ; 110 ; 210 ; 310 ; 410 ; 510), destiné à assembler deux extrémités de tubes, comprenant une bande de collier (20 ; 120 ; 220 ; 320 ; 420 ; 520) et au moins un logement interne (40 ; 140 ; 240 ; 340 ; 440, 441 ; 540) qui y est placé au moins par endroits, la bande de collier (20 ; 120 ; 220 ; 320 ; 420 ; 520) comportant une fente longitudinale (22 ; 122 ; 222) et un mécanisme de serrage (12 ; 112 ; 212 ; 412) pour la réduction du diamètre interne de la bande de collier (20 ; 120 ; 220 ; 320 ; 420 ; 520), la bande de collier (20 ; 120 ; 220 ; 320 ; 420 ; 520) étant fabriquée par ailleurs en un ruban plat d'un seul tenant et comportant au moins un premier segment de bande extérieur (28 ; 128 ; 228 ; 328, 428, 528) et au moins un premier segment de bande intérieur (25 ; 125 ; 225 ; 325, 425, 525), lesquels sont assemblés par l'intermédiaire d'au moins un moyen d'assemblage (26 ; 126 ; 226 ; 326 ; 426 ; 526), une structure d'assemblage (30 ; 130 ; 230 ; 330 ; 430 ; 530) étant prévue pour bloquer l'au moins un logement interne (40 ; 140 ; 240 ; 340 ; 440, 441 ; 540) dans la bande de collier (20 ; 120 ; 220 ; 320 ; 420 ; 520), laquelle est constituée d'au moins une première pièce d'assemblage (32 ; 132 ; 232 ; 332 ; 432 ; 532) et d'au moins une deuxième pièce d'assemblage (34 ; 134 ; 234 ; 334 ; 434 ; 534), l'au moins une première pièce d'assemblage (32 ; 132 ; 232 ; 332 ; 432 ; 532) s'étendant dans l'au moins une deuxième pièce d'assemblage (34 ; 134 ; 234 ; 334 ; 434 ; 534), **caractérisé en ce qu'**au moins l'une des pièces d'assemblage (32, 34 ; 132, 134 ; 232, 234 ; 332, 334 ; 432,434 ; 532,534) de la structure d'assemblage (30 ; 130 ; 230 ; 330 ; 430 ; 530) est conçue sous la forme du moyen d'assemblage (26 ; 126 ; 226 ; 326 ; 426 ; 526) destiné à assembler l'au moins un premier segment de bande extérieur (28 ; 128 ; 228 ; 328 ; 428 ; 528) avec l'au moins un premier segment de bande intérieur (25 ; 125 ; 225 ; 325 ; 425 ; 525) .

2. Raccord de tube selon la revendication 1, **caractérisé en ce qu'**au moins l'une des pièces d'assemblage (32, 34 ; 132, 134 ; 232, 234 ; 332, 334 ; 432, 434 ; 532, 534) comporte un évidement.

3. Raccord de tube selon la revendication 1 ou 2, **caractérisé en ce qu'**au moins l'une des pièces d'assemblage (32, 34 ; 132, 134 ; 232, 234 ; 332, 334 ; 432, 434 ; 532, 534) est conçue sous la forme d'une ouverture, notamment d'un trou rond et/ou d'un trou oblong.

4. Raccord de tube selon l'une quelconque des revendications 1 à 3, **caractérisé en ce que** l'au moins une première pièce d'assemblage (32 ; 132 ; 232 ; 332 ; 432 ; 532) s'engage avec un ajustage précis dans l'au moins une deuxième pièce d'assemblage (34 ; 134 ; 234 ; 334 ; 434 ; 534).

5. Raccord de tube selon la revendication 3 ou 4, **caractérisé en ce que** l'au moins une première pièce d'assemblage (32 ; 132 ; 232 ; 332 ; 432 ; 532) s'étend au-delà de l'au moins une deuxième pièce d'assemblage (34 ; 134 ; 234 ; 334 ; 434 ; 534).

6. Raccord de tube selon l'une quelconque des revendications 1 à 5, **caractérisé en ce que** l'au moins une première pièce d'assemblage (32 ; 132 ; 232 ; 332 ; 432 ; 532) est placée sur la bande de collier (20 ; 120 ; 220 ; 320 ; 420 ; 520) et **en ce qu'**au moins une deuxième pièce d'assemblage (34 ; 134 ; 234 ; 334 ; 434 ; 534) est placée sur l'au moins un logement interne (40 ; 140 ; 240 ; 340 ; 440,441 ; 540).

7. Raccord de tube selon l'une quelconque des revendications 1 à 6, **caractérisé en ce que** la structure d'assemblage (30 ; 130 ; 230 ; 330 ; 430 ; 530) comporte l'au moins un moyen d'assemblage (26 ; 126 ; 226 ; 326 ; 426 ; 526) destiné à assembler l'au moins un premier segment de bande extérieur (28 ; 128 ; 228 ; 328 ; 428 ; 528) avec l'au moins un premier segment de bande intérieur (25 ; 125 ; 225 ; 325 ; 425 ; 525).

8. Raccord de tube selon l'une quelconque des revendications 1 à 7, **caractérisé en ce qu'**au moins une première pièce d'assemblage (32 ; 132 ; 232 ; 332) de la structure d'assemblage (30 ; 130 ; 230 ; 330 ; 430 ; 530) sur la bande de collier (20 ; 120 ; 220 ; 320 ; 420 ; 520) et au moins une deuxième pièce d'assemblage (34 ; 134 ; 234 ; 334 ; 434 ; 534) de la structure d'assemblage (30 ; 130 ; 230 ; 330 ; 430 ; 530) sur l'au moins un logement interne (40 ; 140 ; 240 ; 340 ; 440, 441 ; 540) sont conçues sous la forme d'une ouverture, l'au moins un moyen d'assemblage (26 ; 126 ; 226 ; 326 ; 426 ; 526) destiné à l'assemblage amovible de la bande de collier (20 ; 120 ; 220 ; 320 ; 420 ; 520) avec l'au moins un logement interne (40 ; 140 ; 240 ; 340 ; 440, 441 ; 540) s'étendant à travers les ouvertures respectives.

9. Raccord de tube selon l'une quelconque des revendications 1 à 8, **caractérisé en ce que** la structure d'assemblage (30 ; 130 ; 230 ; 330 ; 430 ; 530) est placée dans une zone au vis-à-vis de la fente longitudinale (22 ; 122 ; 222) de la bande de collier (20 ; 120 ; 220 ; 320 ; 420 ; 520) et/ou les deuxièmes extrémités (31, 33 ; 431, 433) de la bande de collier (20 ; 120 ; 220 ; 320 ; 420 ; 520) sont placées en aboutement (29 ; 129 ; 229 ; 329 ; 429 ; 529).

10. Raccord de tube selon l'une quelconque des revendications 1 à 9, **caractérisé en ce que** la structure d'assemblage (30 ; 130 ; 230 ; 330 ; 430 ; 530) est conçue sous la forme d'un assemblage par complémentarité de forme et/ou sous la forme d'un assemblage par complémentarité de force.

11. Raccord de tube selon l'une quelconque des revendications 1 à 10, **caractérisé en ce que** l'au moins un logement interne (40 ; 140 ; 240 ; 340 ; 440, 441 ; 540) comporte une fente longitudinale ( 45 ; 145 ; 245) et/ou comporte au moins une bride latérale (42, 43 ; 142, 143 ; 242 ; 243 ; 442 ; 443) et/ou avantageusement, l'au moins un logement interne (40 ; 140 ; 240 ; 340 ; 440, 441 ; 540) présente le long de son axe longitudinal une largeur de logement interne (IGB) inférieure à une largeur de bande de collier (SBB) de la bande de collier (20 ; 120 ; 220 ; 320 ; 420 ; 520).
